# FASCICULE DE BREVET EUROPEEN

(11) **EP 1 397 690 B1**
(45) Date de publication et mention de la délivrance du brevet: **28.04.2010**
(21) Numéro de dépôt: 02745530.2
(22) Date de dépôt: 14.06.2002
(51) Int. Cl.: G01P 3/44

(54) **PALIER A ROULEMENT EQUIPE D'UN CAPTEUR DE VITESSE ANGULAIRE**
WÄLZLAGER MIT DREHGESCHWINDIGKEITSAUFNEHMER
ROLLER BEARING EQUIPPED WITH AN ANGULAR VELOCITY SENSOR

(30) Priorité: 20.06.2001 FR 0108119; 25.07.2001 FR 0109935
(43) Date de publication de la demande: 17.03.2004
(73) Titulaire: Aktiebolaget SKF, 415 50 Göteborg (SE)
(72) Inventeur: NIARFEIX, François, F-37000 TOURS (FR); TSUZURA, Nobutoshi, Yokohama (JP)
(74) Mandataire: Casalonga, Axel
(86) Numéro de dépôt international: PCT/FR2002/002040
(87) Numéro de publication internationale: WO 2003/003023

(56) Documents cités:
- EP-A- 0 546 918
- WO-A-98/11356
- DE-A- 19 537 039
- FR-A- 2 791 103
- FR-A- 2 792 979
- US-A- 5 195 830
- PATENT ABSTRACTS OF JAPAN vol. 011, no. 071 (M-567), 4 mars 1987 (1987-03-04) -& JP 61 228120 A (KOYO SEIKO CO LTD), 11 octobre 1986 (1986-10-11)
- PATENT ABSTRACTS OF JAPAN vol. 2000, no. 02, 29 février 2000 (2000-02-29) -& JP 11 303859 A (NIPPON SEIKO KK), 2 novembre 1999 (1999-11-02)

## Description

La présente invention concerne le domaine des paliers à roulement instrumentés munis d'un ensemble de détection des paramètres de rotation, tels que la position angulaire, le sens de rotation, la vitesse, l'accélération.

Les dispositifs de paliers à roulement instrumentés comprennent généralement une bague tournante, une bague non tournante, une rangée d'éléments roulants disposés entre des chemins de roulement desdites bagues tournante et non tournante. Un bloc capteur est solidaire de la bague non tournante, un ensemble codeur étant solidaire de la bague tournante. On connaît par le document FR 2 792 979 un palier à roulement tel que décrit ci-dessus.

Dans les montages conventionnels, les pièces sur lesquelles sont montées les roulements doivent être fabriquées avec des tolérances réduites afin de respecter les ajustements radiaux adéquats avec les bagues de roulement qui sont usinées avec une grande précision.

De plus, dans un montage devant subir de fortes variations de température, comme les coefficients de dilatation des bagues du roulement et de l'arbre ou d'un logement non tournant sont différents, les ajustements entre les différentes pièces peuvent varier.

Si la bague non tournante supportant le bloc capteur, du fait de la dilatation thermique différente du support de la bague non tournante, n'est plus fixée dans le support par le serrage initial, une conséquence peut être la rotation de la bague non tournante par rapport au support, du fait des frottements existant entre la bague tournante et la bague non tournante. Des mesures des paramètres de rotation du palier à roulement seront alors perturbées. L'apparition d'un jeu entre le roulement et son support peut également être à l'origine de vibrations indésirables.

L'invention propose un dispositif de palier à roulement instrumenté pour récupérer des informations concernant des paramètres de rotation du palier à roulement et permettant de s'affranchir des problèmes de différence de dilatation des éléments d'un palier à roulement.

L'invention propose également un dispositif de palier à roulement instrumenté limitant la transmission de vibrations ou de chaleur entre un élément roulant et un support.

L'invention propose également un dispositif de palier à roulement instrumenté permettant une simplification du montage de l'ensemble du dispositif de palier à roulement instrumenté, et une réduction des coûts de fabrication.

L'invention propose encore un dispositif de palier à roulement instrumenté permettant de préserver un ensemble capteur d'information d'agression extérieures, et facilitant son intégration.

Un dispositif de palier à roulement instrumenté, selon un aspect de l'invention, comprend une bague tournante, une bague non tournante, au moins une rangée d'éléments tournants disposés entre des chemins de roulement des bagues tournante et non tournante, et un ensemble capteur d'informations concernant des paramètres de rotations comprenant un bloc capteur non tournant. Le dispositif comprend en outre un codeur tournant destiné à coopérer avec un organe de détection porté par le bloc capteur, le bloc capteur comprenant une portion annulaire disposée radialement entre la bague non tournante et un support de façon que ladite portion annulaire forme une interface entre la bague non tournante et le support pour compenser des variations dimensionnelles radiales.

La portion annulaire du bloc capteur formant interface permet de conserver des ajustements convenables malgré des variations dimensionnelles dûes à la dilatation des éléments, grâce à une certaine élasticité. La portion annulaire du bloc capteur permet également d'absorber des vibrations qui pourraient être transmises entre le support et le dispositif de palier à roulement. Par ailleurs, le support peut être usiné avec moins de précision et à un moindre coût, la portion annulaire du bloc capteur formant interface étant apte à compenser d'éventuelles différences de dimensions dues aux tolérances de fabrication.

L'adaptation d'un bloc capteur de façon qu'il présente une portion annulaire formant interface permet de limiter un nombre de pièce, ce qui facilite l'assemblage du dispositif de palier à roulement instrument, ainsi que son montage dans un ensemble mécanique.

Dans un mode de réalisation, l'organe de détection est porté par une portion du bloc capteur décalée axialement par rapport à la bague extérieure. Ainsi, l'organe de détection disposé dans une portion décalée axialement par rapport à la portion annulaire d'interface est préservé de contraintes radiales pouvant apparaître dans la portion annulaire formant interface. L'organe de détection, qui peut être à titre d'exemple nullement limitatif un détecteur optique ou un détecteur magnéto-sensible, peut facilement être disposé en regard d'une partie active du codeur. Par ailleurs, la portion annulaire formant interface est préservée pour conserver une élasticité radiale satisfaisante.

Dans un mode de réalisation, la portion annulaire est limitée radialement par deux surfaces cylindriques, la bague non tournante étant en contact avec l'une des surfaces cylindriques de la portion annulaire, l'autre surface cylindrique de la portion annulaire étant en contact avec le support.

Avantageusement, une extrémité axiale de la portion annulaire est élastique radialement. La déformation radiale de l'extrémité de la portion facilite l'assemblage du bloc capteur et de la bague non tournante.

Dans un mode de réalisation, la portion annulaire comprend une surface radiale d'extrémité adjacente à la bague non tournante pourvue d'une rainure annulaire. La rainure annulaire est de dimension suffisante pour permettre une déformation radiale élastique de la partie de la portion adjacente à la surface radiale, et radialement en regard de la rainure annulaire.

Avantageusement, la portion annulaire comprend des moyens d'immobilisation axiale de la bague non tournante par rapport au bloc capteur.

Dans un mode de réalisation, la portion annulaire comprend une nervure radiale continue ou discontinue dans le sens circonférentiel, en saillie vers l'intérieur et en contact axial avec une surface de la bague non tournante, de façon que la bague non tournante soit immobile axialement dans un sens par rapport au bloc capteur. Lors du positionnement de la bague non tournante sur la surface cylindrique de la portion, la déformation élastique radiale d'une extrémité axiale de la portion annulaire permet le passage de la bague non tournante axialement dans un sens, malgré la présence de la nervure. Lorsque la bague non tournante est avancée axialement suffisamment, la nervure radiale adjacente à l'extrémité axiale de la portion annulaire est libérée. La nervure retrouve sa position initiale, et interdit le déplacement axial de la bague non tournante dans le sens opposé par rapport au bloc capteur.

Dans un mode de réalisation, la portion annulaire comprend une nervure continue ou discontinue dans le sens circonférentiel, en saillie dans une rainure annulaire formée sur la surface extérieure de la bague non tournante, de façon que la bague non tournante soit immobilisée axialement par rapport au bloc capteur.

Avantageusement, la surface extérieure de la portion est pourvue de nervures axiales. L'utilisation de nervures axiales sur la surface cylindrique de la portion permet de faciliter le montage de la portion sur le support. Les nervures axiales permettent de monter la portion avec un serrage dans le support, pour immobiliser angulairement le bloc capteur par rapport au support.

Dans un mode de réalisation, le bloc capteur est surmoulé sur une bague non tournante en tôle emboutie. Ce mode de réalisation permet de diminuer les coûts de fabrication.

Dans un mode de réalisation, le codeur comprend un bloc codeur surmoulé sur une bague tournante en tôle emboutie, et disposé radialement entre la bague tournante et un arbre tournant.

Avantageusement, le bloc capteur comprend un bourrelet radial en appui sur une surface radiale du support, pour immobiliser axialement le bloc capteur sur le support dans un sens. L'immobilisation axiale du bloc capteur sur le support permet de définir la position du palier à roulement par rapport au support.

Dans un mode de réalisation, une surface d'extrémité du support présente au moins une encoche destinée à l'immobilisation angulaire du palier à roulement. Avantageusement, le bloc capteur comprend au moins un ergot en saillie radialement dans l'encoche du support pour immobiliser le bloc capteur sur le support, angulairement dans les deux sens et axialement dans un sens. La présence d'un ergot d'immobilisation angulaire permet d'obtenir en outre une indexation angulaire du palier à roulement par rapport au support.

Le dispositif peut comprendre un doigt rapporté, fixé dans une encoche du support, en saillie radialement dans une encoche du bloc capteur pour immobiliser le bloc capteur sur le support, angulairement dans les deux sens et axialement dans un sens. Par exemple, un ergot du bloc capteur peut interdire un mouvement axial du palier à roulement dans un premier sens, l'ergot rapporté interdisant un mouvement inverse, pour augmenter l'efficacité et la fiabilité de la fixation du palier à roulement sur le support.

La présente invention et ses avantages seront mieux compris à l'étude de la description détaillée de modes de réalisation pris à titre d'exemples non-limitatifs et illustrés par les dessins annexés, sur lesquels :
- la figure 1 est une vue en coupe axiale d'un dispositif de palier à roulement instrumenté selon un aspect de l' invention ;
- la figure 2 est une vue en coupe radiale selon II - II de la figure 1 ;
- la figure 3 est une demi-vue en coupe axiale d'un second mode de réalisation ;
- la figure 4 est une demi-vue en coupe axiale d'un troisième mode de réalisation ;
- la figure 5 est une demi-vue en coupe axiale d'un quatrième mode de réalisation.
- la figure 6 est une vue en coupe axiale d'une variante du dispositif selon la figure 1 ;
- la figure 7 est une vue de face en élévation du dispositif de la figure 6 ;
- la figure 8 est une vue en coupe selon VIII-VIII d'après la figure 9, d'une variante du dispositif selon la figure 6 ; et
- la figure 9 est une vue de face en élévation du dispositif de la figure 8 ;

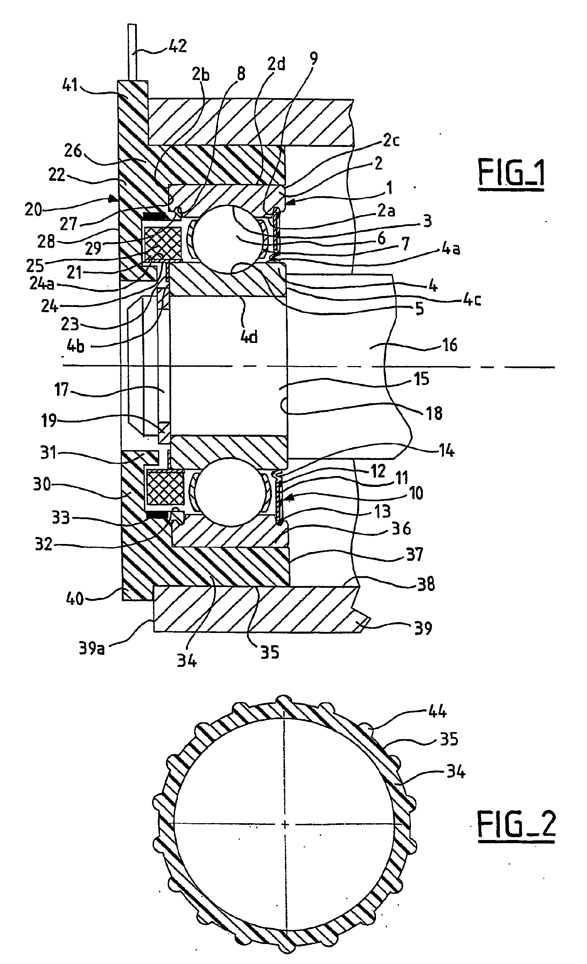

Sur la figure 1, un roulement 1 comprend une bague extérieure non tournante 2 pourvue sur son alésage 2a d'un chemin de roulement torique 3, une bague intérieure tournante 4 pourvue sur sa surface extérieure 4a d'un chemin de roulement torique 5, et une rangée d'éléments roulants 6, ici des billes, disposés entre le chemin de roulement 3 de la bague extérieure 2 et le chemin de roulement 5 de la bague intérieure 4. Les éléments roulants 6 sont maintenus à espacement circonférentiel régulier par une cage 7. On pourrait utiliser, à la place de billes, des rouleaux ou des aiguilles. Les bagues intérieure 4 et extérieure 2, massives, ont été obtenues par usinage conventionnel.

La bague extérieure 2 est également pourvue de deux surfaces latérales radiales 2b, 2c opposées et d'une surface extérieure cylindrique 2d. Deux rainures 8 et 9 symétriques par rapport au plan radial passant par le centre des éléments roulants 6, sont formées dans l'alésage 2a de la bague extérieure 2, la rainure 8 étant adjacente à la surface radiale 2b, la rainure 9 étant adjacente à la surface radiale 2c.

La bague intérieure 4 est également pourvue de deux surfaces latérales radiales 4b, 4c opposées, respectivement dans le même plan radial que les surfaces 2b et 2c, et d'un alésage 4d.

Un organe d'étanchéité référencé 10 dans son ensemble est fixé sur la bague extérieure 2. L'organe d'étanchéité 10 comprend une armature rigide métallique 11 en forme générale de disque sur laquelle est surmoulée une partie élastique 12 réalisée en caoutchouc par exemple. La partie élastique 12 est annulaire et comprend à son extrémité de plus grand diamètre un bourrelet 13 monté à force dans la rainure 9 de la bague extérieure 2. La partie élastique 12 comprend à son extrémité de petit diamètre une lèvre d'étanchéité 14 en contact de frottement sur la surface extérieure 4a de la bague intérieure 4.

L'organe d'étanchéité 10 est de type standard dans les roulements non instrumentés, et assure l'étanchéité à l'encontre de la pollution extérieure et des fuites du lubrifiant, graisse par exemple, disposé à l'intérieur du roulement 1.

Le roulement 1 est monté sur l'extrémité 15 d'un arbre tournant 16, par exemple un arbre tournant d'un moteur électrique. L'extrémité 15 de l'arbre 16 comprend une surface cylindrique extérieure 15a limitée du côté de l'extrémité libre par une rainure annulaire 17 à bords radiaux et du côté opposé par une surface radiale 18 s'étendant vers l'extérieur et formant un épaulement.

La bague intérieure 4 est emmanchée sur la surface extérieure cylindrique 15a de l'extrémité 15 de l'arbre 16. La surface latérale radiale 4c de la bague intérieure 4 est en contact avec la surface radiale 18 de l'arbre 16. Un organe de retenue 19, par exemple un circlips, est disposé dans la rainure 17 de l'extrémité 15, en étant en contact avec la surface latérale radiale 4b de la bague intérieure 4, pour empêcher un mouvement axial de la bague intérieure 4 par rapport à l'extrémité 15 de l'arbre 16.

Un ensemble capteur d'informations 20 comprend un codeur 21 et un bloc capteur 22. Le codeur 21 comprend un support annulaire métallique à section en T, comprenant une portion radiale 23 en appui sur la surface latérale radiale 4b de la bague intérieure 4. Une portion axiale 24 du support annulaire métallique s'étend à partir de la zone de plus grand diamètre de la portion radiale 23, axialement de chaque côté de la portion radiale 23. L'extrémité de la portion axiale 24, située du côté des éléments roulants 6, est emmanchée sur la surface extérieure 4d de la bague intérieure 4, de façon que le codeur 21 soit solidaire angulairement de la bague intérieure 4. Une partie active 25 est surmoulée sur la surface extérieure cylindrique 24a de la portion axiale 24, en se situant radialement entre les bagues intérieure 4 et extérieure 2. La partie active 25 est disposée de part et d'autre du plan radial des surfaces latérales radiales 2b et 4b respectivement des bagues extérieure 2 et intérieure 4.

Le bloc capteur 22 comprend une couronne 26 possédant du côté du roulement 1 une surface radiale 27 en contact avec la surface latérale radiale 2b de la bague extérieure 2, et du côté axialement opposé, une surface radiale 28. Un bourrelet annulaire 29 issu de la couronne 26, possédant une section de forme concordante avec la rainure 8, fait saillie à partir de la zone de moindre diamètre de la surface radiale 27 de la couronne 26 dans la rainure 8 de la bague extérieure 2. Le bourrelet 29 de la bague extérieure 2 maintient axialement et angulairement la couronne 26 fixe par rapport à la bague extérieure 2.

Une paroi radiale 30 s'étend radialement vers l'intérieur à partir de l'extrémité axiale de la couronne 26 opposée au roulement 1, en se situant axialement au-delà du codeur 21. Une portion axiale 31, de diamètre extérieur inférieur au diamètre intérieur de la paroi axiale 24 du codeur 21, s'étend axialement vers le roulement 1 à partir de la zone de moindre diamètre de la paroi radiale 30. La portion axiale 31 vient axialement à proximité de la paroi radiale 23 du codeur 21, et radialement à proximité de la paroi axiale 24 du codeur 21.

La paroi radiale 30 du bloc capteur 22 se situe axialement à proximité de la partie active 25 du codeur. Ainsi, la paroi radiale 30 et la paroi axiale 31 forment un passage étroit, axialement et radialement, avec le codeur 21. La formation d'un passage étroit permet de prévenir l'intrusion d'éléments extérieurs entre le bloc capteur 22 et le codeur 21, qui pourraient perturber les mesures effectuées par l'ensemble capteur d'informations 20. La couronne 26 comprend sur une surface intérieure 32 un organe de détection 33 situé axialement en regard de la partie active 25 du codeur 21, affleurant de la surface intérieure 32 de la couronne 26.

Si la partie active 25 du codeur 21 est une succession de zones réfléchissantes et de zones non réfléchissantes circonférentiellement alternées, l'organe de détection 33 sera par exemple un détecteur optique. Si la partie active 25 du codeur 21 est une couronne magnétique, l'organe de détection 33 sera alors un organe de détection magnétosensible, par exemple une sonde à effet Hall.

Une portion annulaire 34 s'étend axialement du côté du roulement 1, à partir de la zone de plus grand diamètre de la couronne 26. La portion annulaire 34 est de longueur axiale sensiblement égale ou supérieure à la longueur axiale du roulement 1, la portion annulaire 34 recouvrant la bague extérieure 2 du roulement 1. La portion annulaire 34 est limité radialement par deux surfaces cylindriques 35 et 36. La surface cylindrique 35 est la surface extérieure de la portion annulaire 34, la surface cylindrique 36 est la surface intérieure de la portion annulaire 34. La portion annulaire 34 comprend une surface radiale d'extrémité 37 se situant sensiblement dans le même plan radial que la surface latérale radiale 2 de la bague extérieure 2.

La bague extérieure 2 du roulement 1 est emmanchée sur la surface cylindrique intérieure 36 de la portion annulaire 34. La surface cylindrique extérieure 35 de la portion annulaire 34 est emmanchée dans l'alésage 38 d'un logement support 39. La portion annulaire 34 est disposée radialement entre la bague extérieure 2 et le support 39. Un bourrelet radial ou une collerette radiale 40 fait saillie radialement vers l'extérieur à partir de l'extrémité de la couronne 26 opposée au roulement 1, en venant en butée axiale sur une surface radiale d'extrémité 39a du support 39.

Une portion de connexion 41 fait saillie radialement vers l'extérieur à partir de la surface extérieure de la collerette radiale 40. Une connexion du type filaire 42 fait saillie de la portion de connexion 41, en étant reliée de façon non représentée à l'organe de détection 33, pour transmettre les informations en provenance de l'organe de détection 33 vers un module de traitement.

La bague extérieure 2, non tournante, est emmanchée dans la portion annulaire 34, elle-même emmanchée dans l'alésage 38 du support 39. La portion annulaire 34 est montée serrée dans l'alésage 38, en étant déformé radialement de façon élastique. La portion annulaire 34 forme donc une interface entre la bague extérieure 2, et le support 39.

La portion annulaire 34 permet alors de monter facilement le dispositif de palier à roulement instrumenté entre l'arbre 16 et le support 39, de façon adéquate, en absorbant les différences dimensionnelles dues aux tolérances de fabrication de la couronne extérieure 2 et du support 39.

La portion annulaire 34 permet également d'absorber en partie les vibrations qui sont transmises par l'intermédiaire du roulement 1, de l'arbre 16 en rotation, vers le support 39.

La portion annulaire 34 est monobloc avec la couronne 26 du bloc capteur 22. La portion annulaire 34 peut donc facilement être fabriquée lors d'une même opération de fabrication que la couronne 26. Pour ce faire, la couronne 26 et la portion annulaire peuvent être en matière synthétique moulée par injection, par exemple un polyamide 6-6. De préférence, on utilise un matériau possédant une rigidité inférieure à la fois à la rigidité du support 39 et de la bague extérieure 2. Ainsi, des différences de dimension, dûes à des dilatations ou des tolérances de fabrication, et des vibrations, seront compensées par des déformations radiales de la portion annulaire 34, sans apparition de contraintes gênantes dans le support 39 ou la bague extérieure 2.

La couronne 26, en appui sur une surface latérale 2b de la bague non tournante, est décalée axialement par rapport à l'espace compris entre les bagues extérieure 2 et intérieure 4. La couronne 26 est également décalée par rapport à la portion annulaire 34 située radialement entre la bague extérieure 2 et le support 39. Ainsi, la couronne 26 est adaptée pour porter l'organe de détection 33 venant en regard de la partie active 25, l' organe de détection 33 étant préservé des contraintes radiales pouvant apparaître dans la portion annulaire 34. De plus, la couronne 26 en appui latéral sur la bague extérieure 2 revient vers l'intérieur et permet de disposer l'organe de détection 33 à proximité de la partie active 25. L'organe de détection 33 est porté par une portion de la couronne 26 située dans un prolongement axial de la bague extérieure 2, ce qui assure que cette portion subira peu de contraintes radiales.

Lors du fonctionnement d'un dispositif comprenant le dispositif de palier à roulement instrumenté, il peut se produire une augmentation de température de l'ensemble du dispositif. Une augmentation de température provoque la dilatation des différents éléments, comme la bague extérieure 2 et le support 39. Comme ces éléments ne possèdent pas le même coefficient de dilatation, il s'ensuit que lors d'une augmentation de chaleur de l'ensemble du dispositif, les dilatations de la couronne extérieure 2 et du support 39 ne sont pas identiques. Par exemple, le support 39 peut être en aluminium, alors que l'arbre 16 et les bagues intérieure 4 et extérieure 2 sont en acier.

Les ajustements entre la bague extérieure 2 et le support 39 peuvent être modifiés de sorte que le serrage de la bague extérieure 2 dans le support 39 ne soit plus suffisant. La présence de la portion annulaire 34, située entre la bague extérieure 2 et le support 39, possédant des caractéristiques de dilatation encore différentes, et une certainte élasticité, notamment radialement, permet lors de dilatations importantes de la bague extérieure 2 et du support 39, d'absorber les modifications d'ajustement pour conserver un serrage adéquat et éviter ainsi tout déplacement angulaire indésirable de la bague extérieure 2 par rapport au support 39. La portion annulaire 34 assure que la bague extérieure 2, immobile angulairement par rapport à la portion annulaire 34, elle-même immobile angulairement par rapport au support 39, est immobile par rapport au support 39.

La portion annulaire 34 permet encore de limiter la transmission de chaleur entre la bague extérieure 2 et le support 39 et de baisser la température de fonctionnement du roulement.

Lors du montage du dispositif de palier à roulement instrumenté, le roulement 1 est introduit dans la portion annulaire 34, de façon que la surface extérieure 2d de la bague extérieure 2 soit emmanchée dans la surface cylindrique intérieure 36 de la portion annulaire 34, en étant introduite axialement du côté de la surface radiale d'extrémité 37 de la portion annulaire 34. La bague extérieure 2 est introduite axialement jusqu'à venir en butée sur la surface radiale 27 de la couronne 26, le bourrelet 29 venant en saillie dans la rainure annulaire 8 de la bague extérieure 2. Lors de l'introduction de la bague extérieure 2 dans la portion annulaire 34, le bourrelet annulaire 29 se déforme élastiquement, radialement vers l'intérieur, de façon à pouvoir s'introduire dans la rainure 8 de la bague extérieure 2. Le bourrelet annulaire 29 permet de solidariser axialement le bloc capteur 22 et la bague extérieure 2, en interdisant un mouvement axial relatif entre le bloc capteur 22 et la bague extérieure 2.

Comme illustré sur la figure 2, la surface cylindrique extérieure 35 de la portion annulaire 34 peut comprendre des nervures axiales 44 s'étendant axialement sur la surface cylindrique extérieure 35. La présence de nervures 44 permet de faciliter l'introduction de la portion annulaire 34 du bloc capteur 22 dans l'alésage 38 du support 39, tout en garantissant la solidarisation axiale et angulaire de la portion annulaire 34 avec le support 39. Lors de l'introduction de la portion annulaire 34 dans l'alésage 38 du support 39, les nervures 44 se déforment en compression. La portion annulaire 34 est montée serrée dans l'alésage 38 du support 39. On notera que l'utilisation de nervures 44 permet en outre de limiter les échanges thermiques entre le support 39 et le bloc capteur 22. On dispose ainsi d'un moyen d'isolation thermique entre le roulement 1 et le support 39.

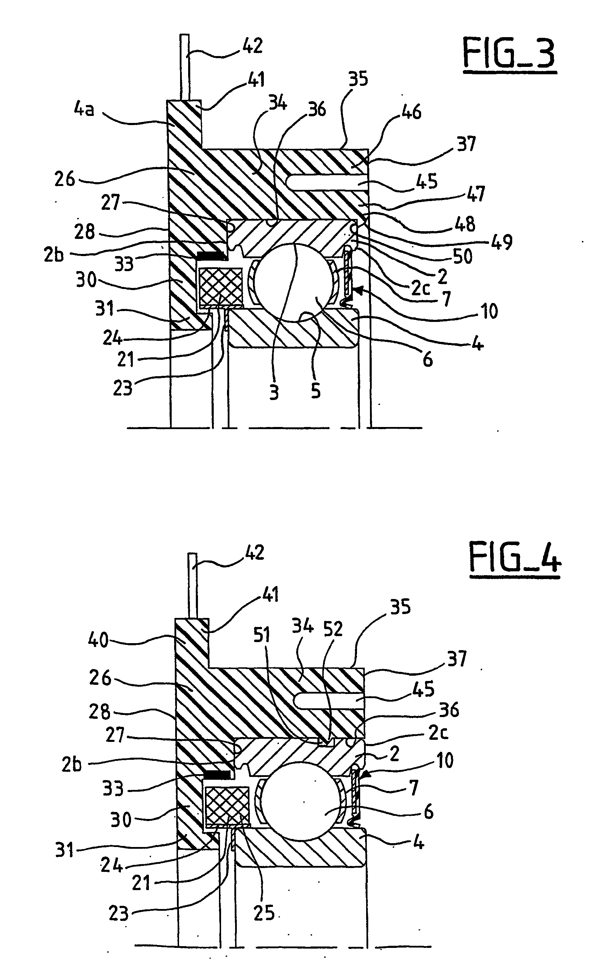

Sur la figure 3, les références relatives à des éléments semblables ont été reprises. Dans ce mode de réalisation, la couronne 26 du bloc capteur 22 ne comprend pas de bourrelet annulaire 29.

La surface radiale d'extrémité 37 de la portion annulaire 34 est pourvue d'une rainure annulaire 45 à section en U, s'étendant axialement dans la portion annulaire 34 en direction de l'organe de détection 33.

La portion annulaire 34 s'étend axialement au-delà du roulement 1, la surface radiale d'extrémité 37 se situant dans un plan radial situé axialement au-delà du plan radial contenant la surface latérale radiale 2b de la couronne extérieure 2. La rainure 45 divise l'extrémité axiale de la portion annulaire 34 en deux parois cylindriques coaxiales 46 et 47. La paroi 46 est la paroi extérieure, la paroi 47 étant la paroi intérieure.

Une nervure radiale 48 formant crochet s'étend radialement vers l'intérieur à partir de l'extrémité axiale de la surface intérieure 36 de la portion annulaire 34 opposée à l'organe de détection 33. La nervure radiale 48 est en contact axial avec la surface latérale radiale 2c de la bague extérieure 2. La nervure radiale 48 empêche le déplacement axial de la couronne extérieure 2 par rapport à la portion annulaire 34.

Lors de l'introduction de la couronne extérieure 2 dans la portion annulaire 34, la présence de la rainure 45 permet la déformation élastique radialement de la portion annulaire 34, de façon à permettre l'introduction de la couronne extérieure 2 dans la portion annulaire 34. Pour ce faire, la nervure 48 possède une section triangulaire, une surface 49 étant orientée obliquement, axialement du côté opposé au roulement 1, une surface radiale 50 étant orientée du côté de la bague extérieure 2.

Lors de l'introduction de la couronne extérieure 2, la couronne extérieure 2 applique un effort sur la surface 49 possédant une composante axiale et une composante radiale. La composante radiale permet la déformation élastique radialement de la paroi intérieure 47. La paroi intérieure 47 se rapproche donc radialement de la paroi extérieure 46. La bague extérieure 2 est alors introduite jusqu'à venir en butée axialement sur la surface radiale 27 de la couronne 26. Lorsque la couronne extérieure se trouve en butée axiale sur la surface 27, la nervure radiale 48 étant libérée, la paroi 47 reprend une position normale, la surface 50 de la nervure radiale 48 venant en contact sur la surface radiale latérale 2c de la couronne extérieure 2. Comme la surface radiale 50 se situe dans un plan radial, un effort axial transmis de la bague extérieure 2 vers la nervure radiale 48 possède une faible composante radiale qui ne permet pas la déformation élastique radialement de la paroi intérieure 47. La nervure radiale 48 interdit donc le déplacement axial de la bague extérieure 2 par rapport à la portion annulaire 34 dans un sens. La paroi 47, au lieu d'être circonférentiellement continue, pourrait être découpée en un certain nombre de secteurs indépendants. La nervure 48 peut être continue ou discontinue dans le sens circonférentiel.

Sur la figure 4, les références aux éléments semblables à la figure 3 ont été conservées. La surface radiale d'extrémité 37 de la portion annulaire 34 se situe sensiblement dans le même plan radial que la surface radiale latérale 2c de la bague extérieure 2. La surface extérieure 2d de la bague extérieure 2 est pourvue d'une rainure annulaire 51 à section rectangulaire. La paroi intérieure 36 de la portion annulaire 34 est pourvue d'une nervure annulaire à section triangulaire faisant saillie radialement dans la rainure annulaire 51 de la couronne extérieure 2. Lors de l'introduction de la couronne extérieure 2 dans la portion annulaire 34, la présence de la rainure annulaire 45 permet la déformation élastique radialement de la portion annulaire 34 afin d'autoriser l'introduction de la couronne extérieure 2 dans la portion annulaire 34, malgré la présence de la nervure annulaire 52. Lorsque la couronne extérieure 2 arrive en butée sur la surface radiale 27 de la couronne 26, la nervure annulaire 52 se situe radialement en regard de la rainure annulaire 51 de la bague extérieure 2. La portion intérieure 47 reprend alors une position normale, la rainure annulaire 52 faisant saillie dans la rainure annulaire 51 de la bague extérieure 2. La nervure annulaire 52 interdit alors un déplacement axial dé la bague extérieure 2 par rapport à la portion annulaire 34.

Bien entendu, on peut prévoir une rainure annulaire 51 possédant un profil de section différent, et une nervure annulaire 52 possédant également un profil de section différent, apte à coopérer avec la rainure annulaire 51 pour empêcher le déplacement axial de la bague extérieure 2 par rapport à la portion annulaire 34 dans un sens. La nervure 52 peut être continue ou discontinue dans le sens circonférentiel. La rainure annulaire 45 peut également posséder une section différente permettant d'obtenir une déformation radiale suffisante de la portion annulaire 34 pour permettre le passage axialement de la bague extérieure 2.

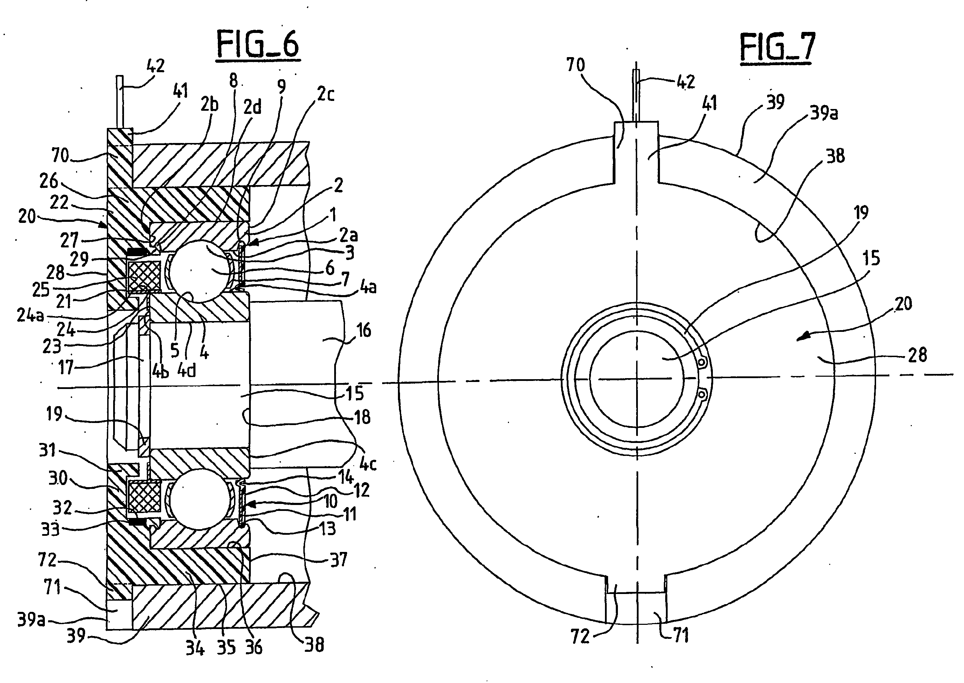

Sur les figures 6 et 7, illustrant une variante du dispositif selon la figure 1, le support 39 comprend sur sa surface radiale d'extrémité 39a des encoches radiales 70, 71, diamétralement opposées, de largeurs différentes. La portion de connexion 41 du bloc capteur 22 forme un ergot venant en saillie dans l'encoche 70. Le bloc capteur 22 comprend un autre ergot radial 72 en saillie dans l'encoche 71. La surface radiale 28 du bloc capteur 22 se situe dans le même plan radial que la surface d'extrémité 39a.

La portion de connexion 41 et l'ergot 72 forment un moyen d'immobilisation angulaire du palier à roulement 1 par rapport au support 39, et coopérent avec les encoches 70, 71. La portion de connexion 41 et l'ergot 72 permettent également le positionnement du palier à roulement 1 en interdisant un mouvement du palier à roulement 1 dans le sens de son introduction plus avant dans le support 39.

La liaison angulaire réalisée par la portion de connexion 41 et l'ergot 72 logés dans les encoches 70, 71 permet également une indexation angulaire du palier à roulement 1 par rapport au support 39, dans la mesure où des largeurs d'encoches différentes n'autorisent qu'une position angulaire de montage du bloc capteur 22 par rapport au support 39.

Bien entendu, une seule encoche 70 coopérant avec un ergot 72 ou avec une portion de connexion 41 suffirait à obtenir une indexation et une immobilisation, angulairement dans les deux sens et axialement dans un sens.

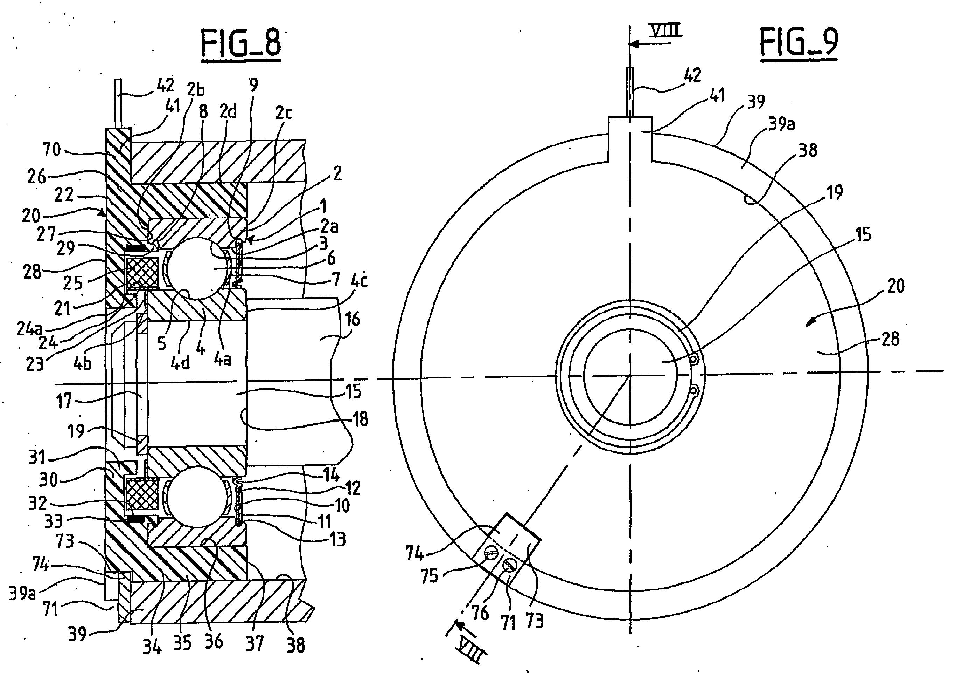

Sur les figures 8 et 9, illustrant une variante d'un palier à roulement selon la figure 6, les références aux éléments semblables ont été reprises. L'encoche 71 est décalée angulairement par rapport à la position diamétralement opposée.

Le bloc capteur comprend une encoche axiale 73 formée sur la surface extérieure cylindrique 35 de la portion annulaire 34 à partir de la surface 28 du bloc capteur 22, et située radialement en regard de l'encoche 71 en étant sensiblement de même longueur axiale. Un doigt rapporté 74 est fixé dans l'encoche 73 par l'intermédiaire de deux vis 75, 76 introduites axialement dans deux trous borgne filetés du support 39. Le doigt 74 vient en saillie dans l'encoche 73 du bloc capteur 22.

Le doigt 74 assure une indexation angulaire et une immobilisation angulaire du palier à roulement 1 par rapport au support 39. Le doigt 74 interdit un mouvement axial du palier à roulement 1 qui tendrait à le faire sortir du support 39, la portion de connexion 41 interdisant un mouvement axial inverse. On améliore ainsi l'efficacité et la fiabilité de la fixation du palier à roulement 1 sur le support 39.

Bien entendu, la portion 34 formant interface entre la bague intérieure 2 et le support 39 peut être de forme différente. Toute forme permettant de réaliser une interface entre la bague intérieure 2 et le support 39, et assurant le centrage du palier à roulement 1, tout en compensant les différences dimensionnelles dues aux tolérances de fabrication ou les variations dimensionnelles dues à une dilatation thermique, peut convenir.

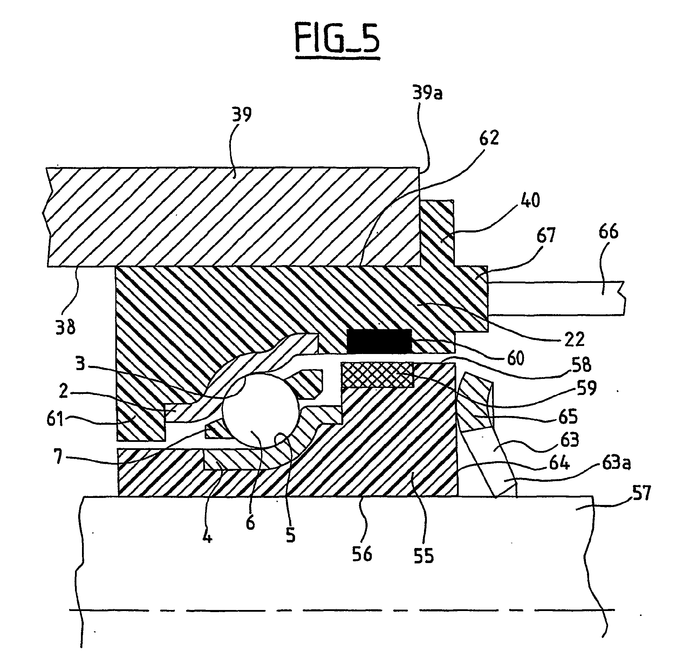

Sur la figure 5, les références aux éléments semblables ont été reprises. Les bagues intérieure 4 et extérieure 2 sont constituées de tôle emboutie.

Un bloc codeur 55, surmoulé sur la bague intérieure 4, comprend un alésage 56 emmanché sur un arbre 57. Le bloc codeur 55 est pourvu d'une périphérie cylindrique 58 sur laquelle affleure une partie active 59. Le bloc codeur 55 est disposé radialement entre la bague intérieure 4 et l'arbre 57.

Le bloc capteur 22 est surmoulé sur la bague extérieure 2 en formant une portion annulaire d'interface disposée radialement entre la bague extérieure 2 et le support 39. Le bloc capteur 22 comprend un organe de détection 60 situé radialement en regard de la partie active 59 du bloc codeur 55. L'organe de détection 60 est décalé axialement par rapport à la bague extérieure 2 en tôle emboutie, en étant logé dans une portion revenant vers l'intérieur, en étant en contact latéralement sur la bague extérieure 2, l'organe de détection 60 affleurant une surface intérieure cylindrique de ladite portion. La périphérie cylindrique 58 du bloc codeur 55 vient radialement à proximité du bloc capteur 22 de façon à former un passage étroit avec ce dernier.

Du côté axialement opposé à l'organe de détection 60, le bloc capteur 22 comprend un bourrelet annulaire 61 faisant saillie radialement vers l'intérieur, et venant à proximité radialement de la surface extérieure du bloc codeur 55, de façon à former un passage étroit. Le bloc capteur 22 comprend une surface cylindrique extérieure 62 emmanchée dans l'alésage 38 du support 39. La portion de connexion 67 du bloc capteur 22 fait saillie axialement, du côté du bloc capteur où se situe l'organe de détection 60. Une liaison filaire 66 fait saillie axialement de la portion de connexion 67, en étant reliée de façon non représentée à l'organe de détection 60.

Une rondelle-frein à languettes élastiques 63, disposée sur l'arbre 57, axialement du côté du bloc codeur 55 où se situe la partie active 59, est en contact axial avec une paroi radiale d'extrémité 64 du bloc codeur 55. La rondelle 63 comprend une portion 63a montée serrée sur l'arbre 57, des languettes élastiques 65 s'étendant radialement vers l'extérieur, obliquement vers la paroi radiale d'extrémité 64. Les languettes 65 sont en appui sur la paroi radiale d'extrémité 64 en étant élastiquement déformées de façon à créer un effort axial, entre la paroi radiale d'extrémité 64 et le bloc codeur, qui maintient une précontrainte sur le palier à roulement, tout en interdisant le mouvement axial du bloc codeur 55 dans le sens opposé.

Les chemins de roulement 3 et 5 des bagues 2 et 4 sont ici configurés de façon que l'on obtient un roulement à contact oblique. Le déplacement axial du bloc codeur 55, dans le sens opposé au sens interdit par la rondelle 63, est donc interdit par le roulement lui-même. Le déplacement axial, vers la gauche sur le dessin, du bloc capteur 22 par rapport au support 39, est interdit par un bourrelet radial 40 faisant saillie radialement à partir de l'extrémité du bloc capteur 22, et venant en contact axial avec la surface radiale d'extrémité 39a du bloc capteur 39.

L'organe de détection 60 décalé par rapport à la bague extérieure 2 ne se situe pas radialement entre la bague extérieure 2 et le support 39. Dès lors, l'organe de détection 60 est préservé de contraintes et de déformations radiales importantes. Par ailleurs, l'organe de détection est disposé dans une portion revenant vers l'intérieur pour venir à proximité radialement de la partie active 59 du codeur 58.

Ce mode de réalisation permet d'obtenir un dispositif de palier à roulement instrumenté à faible coût, pouvant être utilisé par exemple dans une colonne de direction pour véhicule automobile.

Grâce à l'invention, on obtient un dispositif de palier à roulement instrumenté pour la mesure de paramètre de rotation, dont un bloc capteur est agencé pour permettre la fixation d'au moins un organe de détection prévu pour coopérer avec une partie active fixée sur une bague tournante, tout en permettant la formation d'une portion annulaire formant une interface entre la bague non tournante et un support. La portion formant interface permet de s'affranchir des variations d'ajustement entre la bague non tournante et le support, qui se produisent lors des dilatations différentes de la bague non tournante et du support dûes à l'augmentation de température de l'ensemble du dispositif. Cette interface permet encore de diminuer la transmission des vibrations de la bague non tournante vers le support. La portion annulaire formant interface permet également de diminuer la transmission de chaleur de la bague annulaire vers le support. En outre, comme on s'affranchit des problèmes dus aux différences de dilatation entraînant des modifications d'ajustement entre la bague non tournante et le support, il est possible d'usiner le support avec moins de précision, et donc à moindre coût.

## Revendications

1. Dispositif de palier à roulement instrumenté (1) comprenant une bague tournante (4), une bague non tournante (2), au moins une rangée d'éléments tournants (6) disposés entre des chemins de roulement des bagues tournante (4) et non tournante (2), un ensemble capteur d'informations comprenant un bloc capteur (22) non tournant, et un codeur (21) tournant destiné à coopérer avec au moins un organe de détection porté par le bloc capteur, **caractérisé en ce que** le bloc capteur (22) comprend une portion annulaire (34) disposée radialement entre la bague non tournante (2) et un support de façon que ladite portion annulaire (34) forme une interface entre la bague non tournante (2) et le support pour compenser des variations dimensionnelles radiales.

2. Dispositif selon la revendication 1, **caractérisé par le fait que** la portion (34) est limitée radialement par deux surfaces cylindriques (35, 36), la bague non tournante (2) étant en contact avec l'une des surfaces cylindriques (36) de la portion annulaire (34), l'autre surface cylindrique (35) de la portion annulaire (34) étant en contact avec le support.

3. Dispositif selon la revendication 1 ou 2, **caractérisé par le fait qu'**une extrémité axiale de la portion annulaire (34) est élastique radialement.

4. Dispositif selon l'une quelconque des revendications 1 à 3, **caractérisé par le fait que** la portion annulaire (34) comprend une surface radiale d'extrémité (37) adjacente à la bague non tournante pourvue d'une rainure annulaire (45).

5. Dispositif selon l'une quelconque des revendications précédentes, **caractérisé par le fait que** la portion annulaire (34) comprend des moyens d'immobilisation axiale de la bague non tournante (2) par rapport au bloc capteur (22).

6. Dispositif selon la revendication 5, **caractérisé par le fait que** la portion annulaire (34) comprend une nervure radiale (48) continue ou discontinue dans le sens circonférentiel, en saillie vers l'intérieur et en contact axial avec une surface (2c) de la bague non tournante (2), de façon que la bague non tournante (2) soit immobile axialement dans un sens par rapport au bloc capteur (22).

7. Dispositif selon la revendication 5, **caractérisé par le fait que** la portion annulaire (34) comprend une nervure (52) continue ou discontinue dans le sens circonférentiel, en saillie dans une rainure annulaire (51) formée sur la surface extérieure (2d) de la bague non tournante (2), de façon que la bague non tournante (2) soit immobilisée axialement par rapport au bloc capteur (22).

8. Dispositif selon l'une quelconque des revendications précédentes, **caractérisé par le fait que** la surface extérieure (35) de la portion annulaire (34) est pourvue de nervures axiales (44).

9. Dispositif selon l'une quelconque des revendications précédentes, **caractérisé par le fait que** le bloc capteur (22) est surmoulé sur une bague non tournante (2) en tôle emboutie.

10. Dispositif selon l'une quelconque des revendications précédentes, **caractérisé par le fait que** le codeur comprend un bloc codeur (55) surmoulé sur une bague tournante (4) en tôle emboutie, et disposé radialement entre la bague tournante (4) et un arbre tournant.

11. Dispositif selon l'une quelconque des revendications précédentes, **caractérisé par le fait que** le bloc capteur (22) comprend un bourrelet radial en appui sur une surface d'extrémité (39a) du support pour immobiliser axialement le bloc capteur (22) sur le support dans un sens.

12. Dispositif selon l'une quelconque des revendications précédentes, **caractérisé par le fait qu'**une surface d'extrémité (39a) du support présente au moins une encoche (71) destinée à l'immobilisation angulaire du palier à roulement (1).

13. Dispositif selon la revendication 12, **caractérisé par le fait que** le bloc capteur (22) comprend au moins un ergot (72) en saillie radialement dans l'encoche (71) du support pour immobiliser le bloc capteur (22) sur le support, angulairement dans les deux sens et axialement dans un sens.

14. Dispositif selon l'une quelconque des revendications 12 ou 13, **caractérisé par le fait qu'**il comprend un ergot rapporté (74), fixé dans une encoche (71) du support, en saillie radialement dans une encoche (73) du bloc capteur (22) pour immobiliser le bloc capteur (22) sur le support, angulairement dans les deux sens et axialement dans un sens.

## Claims

1. Instrumented rolling bearing device (1) comprising a rotating ring (4), a non-rotating ring (2), at least one row of rotating elements (6) arranged between raceways of the rotating (4) and non-rotating (2) rings, an information sensor assembly comprising a non-rotating sensor unit (22), and a rotating encoder (21) intended to collaborate with at least one detection member borne by the sensor unit, **characterized in that** the sensor unit (22) comprises an annular portion (34) arranged radially between the non-rotating ring (2) and a support so that said annular portion (34) forms an interface between the non-rotating ring (2) and the support to compensate for radial dimensional variations.

2. Device according to Claim 1, **characterized in that** the portion (34) is radially bounded by two cylindrical surfaces (35, 36), the non-rotating ring (2) being in contact with one of the cylindrical surfaces (36) of the annular portion (34), the other cylindrical surface (35) of the annular portion (34) being in contact with the support.

3. Device according to Claim 1 or 2, **characterized in that** one axial end of the annular portion (34) is radially elastic.

4. Device according to any one of Claims 1 to 3, **characterized in that** the annular portion (34) comprises a radial end surface (37) adjacent to the non-rotating ring and provided with an annular groove (45).

5. Device according to any one of the preceding claims, **characterized in that** the annular portion (34) comprises means for axially immobilizing the non-rotating ring (2) with respect to the sensor unit (22).

6. Device according to Claim 5, **characterized in that** the annular portion (34) comprises a radial rib (48) that is continuous or discontinuous in the circumferential direction, projecting inward and in axial contact with a surface (2c) of the non-rotating ring (2) so that the non-rotating ring (2) is axially immobile in one direction with respect to the sensor unit (22).

7. Device according to Claim 5, **characterized in that** the annular portion (34) comprises a rib (52) that is continuous or discontinuous in the circumferential direction, projecting into an annular groove (51) formed on the exterior surface (2d) of the non-rotating ring (2) so that the non-rotating ring (2) is axially immobilized with respect to the sensor unit (22).

8. Device according to any one of the preceding claims, **characterized in that** the exterior surface (35) of the annular portion (34) is provided with axial ribs (44).

9. Device according to any one of the preceding claims, **characterized in that** the sensor unit (22) is overmoulded onto a non-rotating ring (2) made of pressed sheet metal.

10. Device according to any one of the preceding claims, **characterized in that** the encoder comprises an encoder unit (55) overmoulded onto a rotating ring (4) made of pressed sheet metal and arranged radially between the rotating ring (4) and a rotating shaft.

11. Device according to any one of the preceding claims, **characterized in that** the sensor unit (22) comprises a radial bulge pressing against an end surface (39a) of the support to axially immobilize the sensor unit (22) on the support in one direction.

12. Device according to any one of the preceding claims, **characterized in that** one end surface (39a) of the support has at least one notch (71) intended for the angular immobilization of the rolling bearing (1).

13. Device according to Claim 12, **characterized in that** the sensor unit (22) comprises at least one stud (72) projecting radially into the notch (71) of the support to immobilize the sensor unit (22) on the support, angularly in both directions and axially in one direction.

14. Device according to either one of Claims 12 and 13, **characterized in that** it comprises an attached stud (74) fixed in a notch (71) of the support, projecting radially into a notch (73) of the sensor unit (22) to immobilize the sensor unit (22) on the support, angularly in both directions and axially in one direction.

## Patentansprüche

1. Mit Instrumenten versehene Wälzlagervorrichtung (1), die einen drehenden Ring (4), einen nicht drehenden Ring (2), wenigstens eine Reihe Wälzkörper (6), die zwischen Wälzbahnen des drehenden Ringes (4) und des nicht drehenden Ringes (2) angeordnet sind, und eine Datenmessaufnehmeranordnung aufweist, die eine nicht drehende Messaufnehmereinheit (22) und einen Drehgeber (21) besitzt, der zum Zusammenwirken mit wenigstens einem von der Messaufnehmereinheit gehaltenen Erfassungsorgan bestimmt ist, **dadurch gekennzeichnet, dass** die Messaufnehmereinheit (22) einen Ringbereich (34) aufweist, der radial zwischen dem nicht drehenden Ring (2) und einer Abstützung derart angeordnet ist, dass der Ringbereich (34) eine Zwischenlage zwischen dem nicht drehenden Ring (2) und der Abstützung bildet, um radiale Dimensionsabweichungen zu kompensieren.

2. Vorrichtung nach Anspruch 1, **dadurch gekennzeichnet, dass** der Bereich (34) radial durch zwei zylindrische Flächen (35, 36) begrenzt ist, wobei der nicht drehende Ring (2) sich in Kontakt mit einer der zylindrischen Flächen (36) des Ringbereiches (34) und die andere zylindrische Fläche (35) des Ringbereiches (34) sich in Kontakt mit der Abstützung befindet.

3. Vorrichtung nach Anspruch 1 oder 2, **dadurch gekennzeichnet, dass** ein Axialende des Ringbereiches (34) radial elastisch ist.

4. Vorrichtung nach einem der Ansprüche 1 bis 3, **dadurch gekennzeichnet, dass** der Ringbereich (34) nahe dem nicht drehenden Ring eine radiale Stirnfläche (37) besitzt, die mit einer ringförmigen Nut (45) versehen ist.

5. Vorrichtung nach einem der vorhergehenden Ansprüche, **dadurch gekennzeichnet, dass** der Ringbereich (34) Mittel zum axialen Festlegen des nicht drehenden Rings (2) in Bezug auf die Messaufnehmereinheit (22) aufweist.

6. Vorrichtung nach Anspruch 5, **dadurch gekennzeichnet, dass** der Ringbereich (34) eine in Umfangsrichtung durchgängige oder unterbrochene Radialrippe (48) als Vorsprung nach innen und in axialem Kontakt mit einer Fläche (2c) des nicht drehenden Ringes (2) derart aufweist, dass der nicht drehende Ring (2) in einer Axialrichtung in Bezug auf die Messaufnehmereinheit (22) festgelegt ist.

7. Vorrichtung nach Anspruch 5, **dadurch gekennzeichnet, dass** der Ringbereich (34) eine in Umfangsrichtung durchgängige oder unterbrochene Rippe (52) als Vorsprung in eine Ringnut (51) aufweist, die in der Außenfläche (2d) des nicht drehenden Rings (2) ausgebildet ist, so dass der nicht drehende Ring (2) axial in Bezug auf die Messaufnehmereinheit (22) festgelegt ist.

8. Vorrichtung nach einem der vorhergehenden Ansprüche, **dadurch gekennzeichnet, dass** die Außenfläche (35) des Ringbereichs (34) mit Axialrippen (44) versehen ist.

9. Vorrichtung nach einem der vorhergehenden Ansprüche, **dadurch gekennzeichnet, dass** die Messaufnehmereinheit (22) um einen nicht drehenden Ring (2) aus Tiefziehblech geformt ist.

10. Vorrichtung nach einem der vorhergehenden Ansprüche, **dadurch gekennzeichnet, dass** der Geber eine Gebereinheit (55) umfasst, die um einen Drehring (4) aus Tiefziehblech geformt ist und radial zwischen dem Drehring (4) und einer Drehwelle angeordnet ist.

11. Vorrichtung nach einem der vorhergehenden Ansprüche, **dadurch gekennzeichnet, dass** die Messaufnehmereinheit (22) einen Radialwulst als Stütze an einer Stirnfläche (39a) der Abstützung aufweist, um die Messaufnehmereinheit (22) an der Abstützung in einer Richtung axial festzulegen.

12. Vorrichtung nach einem der vorhergehenden Ansprüche, **dadurch gekennzeichnet, dass** die Stirnfläche (39a) der Abstützung wenigstens eine Ausnehmung (71) aufweist, die zur Festlegung des Wälzlagers (1) in Winkelrichtung bestimmt ist.

13. Vorrichtung nach Anspruch 12, **dadurch gekennzeichnet, dass** die Messaufnehmereinheit (22) wenigstens eine Nase (72) als Vorsprung in die Ausnehmung (71) der Abstützung aufweist, um die Messaufnehmereinheit (22) an der Abstützung in beiden Winkelrichtungen und in einer Axialrichtung festzulegen.

14. Vorrichtung nach Anspruch 12 oder 13, **dadurch gekennzeichnet, dass** sie eine angesetzte Nase (74) aufweist, die in einer Ausnehmung (71) der Abstützung als Radialvorsprung in eine Ausnehmung (73) der Messaufnehmereinheit (22) befestigt ist, um die Messaufnehmereinheit (22) an der Abstützung in beiden Winkelrichtungen und einer Axialrichtung festzulegen.
